Europäisches Patentamt

European Patent Office

Office européen des brevets

(11) Veröffentlichungsnummer: **0 022 214**
**B1**

(12) **EUROPÄISCHE PATENTSCHRIFT**

(45) Veröffentlichungstag der Patentschrift: **15.05.85**

(21) Anmeldenummer: **80103576.7**

(22) Anmeldetag: **24.06.80**

(51) Int. Cl.⁴: **C 10 B 53/00,** C 10 B 57/06,
C 02 F 11/10

(54) **Verfahren und Anlage zur Pyrolyse von Abfallstoffen.**

(30) Priorität: **25.06.79 DE 2925620**
**20.12.79 DE 2951478**

(43) Veröffentlichungstag der Anmeldung:
**14.01.81 Patentblatt 81/02**

(45) Bekanntmachung des Hinweises auf die
Patenterteilung:
**15.05.85 Patentblatt 85/20**

(84) Benannte Vertragsstaaten:
**AT BE CH DE FR GB IT LI NL SE**

(56) Entgegenhaltungen:
**AT-B- 212 290**
**AT-B- 295 481**
**DE-A-2 401 570**
**DE-A-2 410 477**
**DE-A-2 514 796**

**Die Akte enthält technische Angaben, die nach
dem Eingang der Anmeldung eingereicht
wurden und die nicht in dieser Patentschrift
enthalten sind.**

(73) Patentinhaber: **BKMI Industrieanlagen GmbH
Sapporobogen 6 - 8
D-8000 München 40 (DE)**

(72) Erfinder: **Schmidt, Rüdiger, Dr.
Am Waldrand 33
D-8000 München 70 (DE)**
Erfinder: **Steininger, Franz
Wilhelm-Busch-Strasse 8/IV
D-8000 München 71 (DE)**

(74) Vertreter: **Planker, Karl-Josef, Dipl.-Phys.
c/o BABCOCK-BSH AKTIENGESELLSCHAFT
Parkstrasse 29 Postfach 4 + 6
D-4150 Krefeld 11 (DE)**

(56) Entgegenhaltungen:
**DE-A-2 659 753**
**DE-A-2 709 671**
**DE-A-2 751 007**
**DE-C- 11 300**
**DE-C- 430 904**
**GB-A-1 408 888**
**GB-A-1 423 420**
**US-A-1 779 024**
**US-A-2 950 230**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# 0 022 214

**Beschreibung**

Die Erfindung betrifft ein Verfahren zur Pyrolyse von Abfallstoffen mit halogenhaltigen und/oder schwefelhaltigen Bestandteilen, die beim Schwelprozeß als gasförmige saure Schadstoffe freiwerden, wobei

a) den Abfallstoffen feinkörnige basische Materialien, wie Calciumhydroxid, Calciumcarbonat und/oder Calciumoxid, in einem überstöchiometrischen Verhältnis—bezogen auf den Halogen- und/oder Schwefelgehalt der Abfallstoffe—zugegeben werden und

b) die Abfallstoffe mit den feinkörnigen basischen Materialien bei einer Temperatur zwischen 300 und 600°C verschwelt werden.

Es ist bereits ein Verfahren zur Pyrolyse von Müll bekannt (DE—A1—2 751 007), bei dem der Müll in einem Drehrohrofen unter weitgehendem Luftabschluß bei einer Temperatur zwischen 450 und 650°C verschwelt wird. Ein solches Verfahren wirft besondere Probleme auf, wenn die Abfallstoffe einen beträchtlichen Gehalt an halogenhaltigen und/oder schwefelhaltigen Bestandteilen aufweisen.

Bei der Pyrolyse von Abfallstoffen mit halogenhaltigen Bestandteilen (z.B. bei Abfallstoffen mit einem Gehalt an PVC und/oder fluorhaltigen Polymeren) entstehen Halogen-Wasserstoffsäuren (HF, HCl), die beträchtliche Probleme bei der Gas- und Abwasserreinigung verursachen und zum Einsatz teurer Materialien in der Schwelzone des Drehrohrofens und im nachgeschalteten Gasreinigungsstrang zwingen. Bei der Pyrolyse schwefelhaltiger Abfallstoffe führt die Anwesenheit von $H_2S$ bzw. $SO_2$ im Pyrolysegas zu ähnlichen Problemen.

Dabei ist zu beachten, daß neue gesetzliche Bestimmungen die Chlor-, Fluor- und $SO_2$-Emission bei der Verbrennung von Haushaltsabfällen dahingehend begrenzen, daß bei Anlagen mit einem Massenstrom an Abfällen von mehr als 0,75 t/h die anorganischen Chlorverbindungen (angegeben als $Cl^-$) 100 $mg/Nm^3$, die Fluorverbindungen (angegeben als $F^-$) 5 $mg/m^3$ und das Schwefeldioxid 80 $mg/Nm^3$ im Abgas nicht überschreiten dürfen. Die Einhaltung derartiger grenzwerte bedingt einen hohen anlagentechnischen Aufwand für die Reinigung der bei der Verschwelung von Abfallstoffen mit halogenhaltigen und/oder schwefelhaltigen Bestandteilen entstehenden Pyrolysegase sowie für die Abwasserreinigung.

Zur Aufarbeitung von Säureteer ist weiterhin ein Verfahren bekannt (AT—B—346 997), bei dem der zu einem wesentlichen Teil (beispielsweise 50 Gew.-%) aus Schwefelsäure bestehende Säureteer mit Oxiden, Hydroxiden oder Carbonaten der Erdalkalien, z.B. mit Kalk, versetzt wird. Das bei dieser Neutralisationsreaktion erhaltene Reaktionsprodukt wird anschließend einer mehrstufigen Wärmebehandlung unterworfen, wobei als erste Stufe eine Schwelbehandlung in einem Drehrohrofen bei 350 bis 500°C erfolgt.

Schließlich ist es auch Stand der Technik (AT—B—212 290), in Gasen als Verunreinigungen enthaltene Halogenide durch Einführen und anschließendes Abscheiden von feinteiligem calcium carbonat (oder ähnlich wirkenden basischen Stoffen) zu entfernen.

Ein besonderes Problem bei der Pyrolyse von Abfallstoffen mit halogenhaltigen und/oder schwefelhaltigen Bestandteilen besteht darin, daß der Gehalt dieser Abfallstoffe an halogenhaltigen und/oder schwefelhaltigen Bestandteilen starken Schwankungen unterliegt, und zwar nicht nur von Charge zu Charge, sondern auch innerhalb einer Charge von Abfallstoffen.

Der Erfindung liegt daher die Aufgabe zugrunde, ein Verfahren der im Oberbegriff des Anspruches 1 genannten Art so auszubilden, daß auch bei schwankendem Schadstoffgehalt der Abfallstoffe die beim Schwelprozeß als gasförmige saure Schadstoffe freiwerdenden halogenhaltigen und/oder schwefelhaltigen Bestandteile mit einem Minimum an feinkörnigen basischen Materialien zuverlässig und rasch so weit eingebunden werden, daß die an die Abgase gestellten Reinheitsforderungen eingehalten werden.

Diese Aufgabe wird erfindungsgemäß dadurch gelöst, daß under Verwendung eines indirekt beheizten Drehrohrofens für die Pyrolyse der Abfallstoffe der Hauptteil der feinkörnigen basischen Materialien den Abfallstoffen vor Eintritt in die Schwelzone zugesetzt und beim Schwellprozeß lediglich eine zur Konstanthaltung des Schadstoffgehaltes erforderliche weitere Teilmenge feinkörniger basischer Materialien zugegeben wird.

Durch die erfindungsgemäße Zugabe einer Teilmenge der basischen Materialien beim Schwelprozeß ist es möglich, sich einem schwankenden Schadstoffgehalt der Abfallstoffe unverzüglich anzupassen, so daß der zulässige Schadstoffgehalt in den Abgasen auch nicht kurzzeitig überschritten wird (was wegen der langen Aufenthaltszeit der Abfallstoffe im Drehrohrofen unvermeidlich wäre, wenn bei Feststellung einer Erhöhung des Schadstoffgehaltes in den Abgasen eine entsprechende Erhöhung der den Abfallstoffen vor Eintritt in die Schwelzone zugesetzten Menge basischer Materialien vorgenommen würde). Dabei ist zu berücksichtigen, daß es im Hinblick auf die Kosten basischer Materialien aus wirtschaftlichen Gründen im allgemeinen nicht sinnvoll ist, bis in die Nähe einer 100%-igen Schadstoffeinbindung zu gehen. Es genügt vielmehr, den Abfallstoffen nur so viel basische Materialien zuzusetzen, daß die jeweils an die Reinheit der Abgase gestellten Bedingungen eingehalten werden. Daraus ergibt sich andererseits die große Bedeutung einer unverzüglich wirksamen Anpassung (insbesondere Erhöhung) der zugesetzten Menge basischer Materialien bei einer festgestellten Änderung (insbesondere Erhöhung) des Schadstoffgehaltes der Abfallstoffe.

Wird diese Konstanthaltung des Schadstoffgehaltes der Abgase (auf den gerade zulässigen Wert)

2

durch den Zusatz einer Teilmenge der basischen Materialien beim Schwelprozeß erreicht, so gewährleistet andererseits die Zugabe des Hauptteiles der basischen Materialien vor Eintritt in die Schwelzone eine gute Vermischung der Abfallstoffe mit diesen basischen Materialien durch die gemeinsame Umwälzung im Drehrohrofen. Hierdurch ergibt sich eine homogene Verteilung der basischen Materialien im Schwelkoks (dem festen Rückstand des Schwelprozesses), der dabei pH-Werte von 7 bis 9,5 erhält, so daß weitaus die meisten in den Abfallstoffen enthaltenen Schwermetalle in Zusammensetzungen vorliegen, die keine Auslaugung des auf einer Deponie abgelagerten Schwelkokses (bezüglich der Schwermetalle) durch Sickerwasser ermöglichen.

Die beim Schwelprozeß zugebene Teilmenge feinkörniger basischer Materialien wird zweckmäßig pneumatisch mittels eines Inertgases, vorzugsweise Stickstoff, Rauchgas, Wasserdampf, in die Schwelzone eingebracht.

Gemäß einer zweckmäßigen Ausgestaltung der Erfindung weist der Drehrohrofen drei in Bewegungsrichtung der Abfallstoffe aufeinanderfolgende, unterschiedlich beheizte Zonen auf, von denen die erste, zur Trocknung der Abfallstoffe dienende Zone eine Ofenaußenwandtemperatur zwischen 450 und 700°C, die zweite, zur bevorzugten Verschwelung der Abfallstoffe bestimmte Zone eine gegenüber der ersten Zone niedrigere Ofenaußenwandtemperatur zwischen 200 und 550°C und die dritte, zur Restentgasung der Abfallstoffe dienende Zone eine gegenüber der zweiten Zone höhre Ofenaußenwandtemperatur zwischen 450 und 700°C aufweist.

Durch eine solche über die Länge des Drehrohrofens unterschiedliche Beheizung läßt sich die Einbindung der Schadstoffe optimieren. Es stellte sich nämlich heraus, daß die Freisetzung der Schadstoffe durch die Verschwelung bevorzugt im mittleren Teil des Drehrohrofens, unmittelbar nach der Trocknungszone, erfolgt und daß die Einbindung der Schadstoffe durch die zugesetzten basischen Materialien in besonderem Maße von der Temperatur der Abfallstoffe in dieser mittleren Zone abhängt. Je niedriger die Temperatur der Abfallstoffe in dieser mittleren Zone des Drehrohrofens (d.h. im ersten Teil der gesamten Schwelzone) ist, umso stärker erfolgt die absorptive Bindung der Schadstoffe an die zugesetzten basischen Materialien. Geht man beispielsweise davon aus, daß bei einer über die ganze Ofenlänge gleichmäßigen Ofenaußenwandtemperatur von ca. 500°C eine vollständige Inertisierung der Abfallstoffe erreicht wird, so wird dieses Ergebnis ebenso erzielt, wenn die mittlere Zone des Ofens beispielsweise bei einer Außenwandtemperatur von 400°C und die letzte Zone des Ofens bei einer Temperatur von 600°C gehalten wird. Gleichzeitig sinkt hierbei der über das Pyrolysegas emittierte Cl-Anteil.

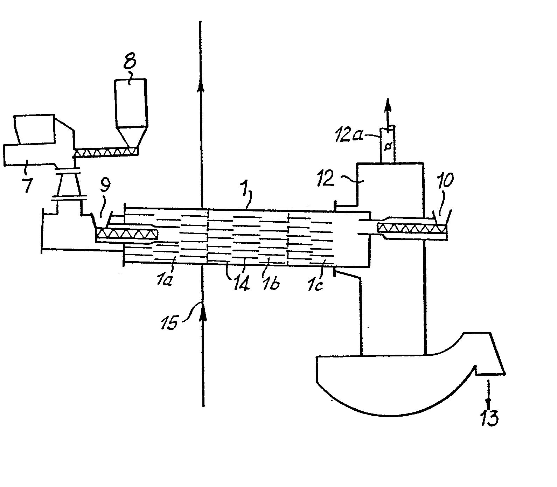

Die Erfindung wird weiter anhand eines in der Zeichnung veranschaulichten Ausführungsbeispieles sowie zweier Versuchsbeispiele erläutert.

In der Zeichnung ist lediglich der zum Verständnis der Erfindung wesentliche Teil einer vollständigen Anlage zur Pyrolyse von Abfallstoffen dargestellt, insbesondere der Drehrohrofen 1, während die Anlagenteile zur Weiterverarbeitung der Pyrolysegase nicht dargestellt sind.

Die Aufgabe der Abfallstoffe in den Drehrohrofen 1 erfolgt über eine Aufgabeeinrichtung 7. Die Zugabe der feinkörnigen basischen Materialien geschieht über Aufgabeeinrichtungen 8, 9 und 10. Über die Aufgabeeinrichtung 8 wird der Hauptteil der feinkörnigen basischen Materialien den Abfallstoffen vor Eintritt in den Drehrohrofen 1 zugegeben. Die Aufgabeeinrichtungen 9 und 10 führen eine weitere Teilmenge der feinkörnigen basischen Materialien pneumatisch mittels eines Inertgases (wie Stickstoff, Rauchgas, Wasserdampt) von beiden Stirnseiten her in den Drehrohrofen 1 ein.

Die Pyrolysegase werden durch das Austragsgehäuse 12 des Drehrohrofens 1 über den Stutzen 12a abgezogen. Der Schwelkoks wird bei 13 ausgetragen. Der Drehrohrofen 1 ist mit hubschaufelartigen Einbauten 14 versehen.

Der indirekt beheizte Drehrohrofen 1 besitzt drei durch gesonderte Heizkammern unterschiedlich beheizte Zonen 1a, 1b und 1c, von denen die zur Trocknung der Abfallstoffe dienende erste Zone 1a eine Ofenaußenwandtemperatur zwischen 450 und 700°C aufweist die anschließende, zur bevorzugten Verschwelung de Abfallstoffe bestimmte zweite Zone 1b eine gegenüber der ersten Zone 1a niedrigere Ofenaußenwandtemperatur zwischen 200 und 550°C und die zur Restentgasung der Abfallstoffe dienende dritte Zone 1c eine gegenüber der zweiten Zone 1b höhere Ofenaußenwandtemperatur zwischen 450 und 700°C.

Zur Beheizung des Drehrohrofens 1 dienen Heißgase, die nur schematisch durch die Leitung 15 angedeutet sind. Zur Erzielung der vorstehend erwähnten Temperaturverteilung in Längsrichtung des Drehrohrofens 1 können die Heißgase zunächst der ersten und dritten Zone 1a bzw. 1c und erst dann der zweiten Zone 1b des Drehrohrofens 1 zugeführt werden.

Die Erfindung sei weiterhin anhand folgender Versuchsbeispiele erläutert.

Versuch 1 (Pyrolyse von nur chlorhaltigen Abfallstoffen):

| | |
|---|---|
| Zusammensetzung der Abfallstoffe: | PVC und andere Kunststoffe, Papier, Lackschlamm |
| Chlorid-Gehalt: | 5%=50 kg Cl/t Abfall |
| Schwefel-Gehalt: | 0% |
| Fluorid-Gehalt: | 0% |
| Schwermetall-Gehalt: | 0% |
| Cl⁻-Emission über Pyrolysegas ohne Kalkzusatz | 32 kg Cl⁻/t Abfall |
| zugesetzte Kalkmenge insges. | 102 kg/t Abfall, |

davon 80 kg über Aufgabeeinrichtung 8 und 22 kg über die Aufgabeeinrichtungen 9 und 10.

| | |
|---|---|
| Cl⁻-Emission über Pyrolysegas | 5,0 kg Cl⁻/t Abfall |

Versuch 2 (Pyrolyse von halogenhaltigen und schwefelhaltigen Abfallstoffen):

| | |
|---|---|
| Abfallstoffe: | PVC und andere Kunststofe, Säureharze, Papier und Lackschlamm. |
| Chloridgehalt | 3%→30 kg Cl/t Abfall |
| Schwefeldioxidgehalt | 3%→30 kg SO₂/t Abfall |
| Fluorgehalt | 0% |
| Cl⁻-Emission über Pyrolysegas ohne Kalkzusatz | 18,5 kg Cl⁻/t Abfall |
| SO₂-Emission über Pyrolysegas ohne Kalkzusatz | 27,6 kg SOₛ/t Abfall |

Zugesetzte Kalkmenge insges. 132 kg/t Abfall, davon 105 kg über Aufgabeeinrichtung 8 und 27 kg über Aufgabeeinrichtungen 9 und 10.

Stöchiom. Verhältnis (Kalk: Cl- und SO₂-Anteil im Abfall) von 2:1.

| | |
|---|---|
| Cl⁻-Emission über Pyrolysegas mit Kalkzusatz | 2,1 kg Cl⁻/t Abfall |
| SO₂-Emission über Pyrolysegas mit Kalkzusatz | 0,4 kg SO₂/t Abfall |
| Ofenwandtemperatur | 500°C |
| Umfangsgeschwindigkeit | 7,5 m/min |

**Patentansprüche**

1. Verfahren zur Pyrolyse von Abfallstoffen mit halogenhaltigen und/oder schwefelhaltigen Bestandteilen, die beim Schwelprozeß als gasförmige saure Schadstoffe freiwerden, wobei

a) den Abfallstoffen feinkörnige basische Materialien, wie Calciumhydroxid, Calciumcarbonat und/oder Calciumoxid, in einem überstöchiometrischen Verhaltnis—bezogen auf den Halogen- und/oder Schwefelgehalt der Abfallstoffe—zugegeben werden und

b) die Abfallstoffe mit den feinkörnigen basischen Materialien bei einer Temperatur zwischen 300 und 600°C verschwelt werden,

dadurch gekennzeichnet, daß

c) unter Verwendung eines indirekt beheizten Drehrohrofens für die Pyrolyse der Abfallstoffe der Hauptteil der feinkörnigen basischen Materialien den Abfallstoffen vor Eintritt in die Schwelzone zugesetzt

4

und beim Schwelprozeß lediglich eine zur Konstanthaltung des Schadstoffgehaltes erforderliche weitere Teilmenge feinkörniger basischer Materialien zugegeben wird.

2. Verfahren nach Anspruch 1, dadurch gekennzeichnet, daß die beim Schwelprozeß zugebene Teilmenge feinkörniger basischer Materialien pneumatisch mittels eines Inertgases, vorzugsweise Stickstoff, Rauchgas, Wasserdampf, in die Schwelzone eingebracht wird.

3. Verfahren nach Anspruch 1, dadurch gekennzeichnet, daß die beim Schwelprozeß zugegebene Teilmenge feinkörniger basischer Materialien von beiden Stirnseiten des Drehrohrofens her in diesen eingeblasen wird.

4. Verfahren nach Anspruch 1, dadurch gekennzeichnet, daß es in einem Drehrohrofen durchgeführt wird der drei in Bewegungsrichtung der Abfallstoffe aufeinanderfolgende, unterschiedlich beheizte Zonen aufweist, von denen die erste, zur Trocknung der Abfallstoffe dienende Zone eine Ofenaußenwandtemperatur zwischen 450 und 700°C, die zweite, zur bevorzugten Verschwelung der Abfallstoffe bestimmte Zone eine gegenüber der ersten Zone niedrigere Ofenaußenwandtemperatur zwischen 200 und 550°C und die dritte, zur Restentgasung der Abfallstoffe dienende Zone eine gegenüber der zweiten Zone höhere Ofenaußenwandtemperatur zwischen 450 und 700°C aufweist.

5. Verfahren nach Anspruch 4, dadurch gekenzeichnet, daß die indirekten Beheizung des Drehrohrofens verwendete Heißgase zunächst der ersten und dritten Zone und erst dann der zweiten Zone zugeführt werden.

6. Verfahren nach Anspruch 1, dadurch gekennzeichnet, daß der Drehrohrofen über seine gesamte Länge hubschaufelartige Einbauten aufweist.

## Revendications

1. Procédé pour la pyrolyse de résidus contenant des éléments halogénés et/ou sulfurés, qui libèrant au cours du processus de carbonisation à basse température des substances gazeuses acides, nuisibles, procédé dans lequel

a) des matières basiques finement granulées, telles que de l'hydroxyde de calcium, du carbonate de calcium et/ou de l'oxyde de calcium, sont ajoutées aux résidus dans des proportions supérieures à la stoechiométrie, par rapport à la teneur en halogène et/ou en soufre des résidus, et

b) les résidus sont, avec les matières basiques finement granulées, carbonisés à une température comprise entre 300 et 600°C, caractérisé en ce que

c) avec l'utilisation d'un four tubulaire rotatif chauffé par voie indirecte pour la pyrolyse des résidus, la partie principale des matières basiques finement granulées est ajoutée aux résidus ayant la pénétration dans la zone de carbonisation à basse température et seule une autre quantité partielle de matières basiques finement granulées, nécessaire pour le maintien à une valeur constante de la teneur en substances nuisibles, est ajoutée au cours du processus de carbonisation à basse température.

2. Procédé suivant la revendication 1, caractérisé en ce que la quantité partielle de matières basiques finement granulées qui est ajoutée au cours du processus de carbonisation à basse température est introduit dans la zone de carbonisation à basse température par voie pneumatique, à l'aide d'un gaz inerte, de préférence de l'azote, du gaz de fumée, de la vapeur d'eau.

3. Procédé suivant la revendication 1, caractérisé en ce que la quantité partielle de matières basiques finement granulées qui est ajoutée au cours du processus de carbonisation à basse température est inssuflée dans le four tubulaire rotatif à partir des deux côtés frontaux de ce dernier.

4. Procédé suivant la revendication 1, caractérisé en ce qu'il est effectué dans un four tubulaire rotatif qui présente trois zones successives dans le sens de déplacement des résidus, qui sont différemment chauffées et dont la première, servant au séchage des résidus, présente une température de paroi externe du four comprise entre 450 et 700°C, la deuxième, destinée à la carbonisation avantageuse à basse température des résidus, une température de paroi externe du four plus basse que dans la première zone et comprise entre 200 et 550°C et la troisième, servant au dégazage des résidus, une température de paroi externe du four plus élevée que dans la deuxième zone et comprise entre 450 et 700°C.

5. Procédé suivant la revendication 4, caractérisé en ce que les gaz chauds utilisés pour le chauffage indirect du four tubulaire rotatif sont amenés tout d'abord à la première et à la troisième zone et, ensuite uniquement, à la deuxième zone.

6. Procédé suivant la revendication 1, caractérisé en ce que le four tubulaire rotatif présente des éléments encastrés du type pales de levage sur la totalité de sa longueur.

## Claims

1. A process for the pyrolysis of waste materials having halogen-containing and/or sulphur-containing constituents, which are released during low-temperature carbonization in the form of gaseous acid pollutants, where

a. fine-grained basic materials such as calcium hydrate, calcium carbonate and/or calcium oxide are added to the waste materials in an over-stoichiometric ratio, based on the halogen and/or sulphur content of the waste materials, and

b. the waste materials are carbonized at a temperature from 300 to 600°C together with the fine-grained basic materials,

characterized in that

c. using an indirectly heated rotary tubular furnace for the pyrolysis of waste materials, the bulk of fine-grained basic materials is added to the waste before the latter enters the low-temperature carbonization zone and that only a further partial quantity of fine-grained basic materials is added during actual carbonization to maintain the pollutant level.

2. A process as claimed under claim 1, characterized in that the partial amount of fine-grained basic materials is pneumatically introduced in the low-temperature carbonization zone by means of an inert gas, preferably nitrogen, stack gas or steam.

3. A process as claimed under claim 1, characterized in that the partial quantity of fine-grained basic materials added during low-temperature carbonization is blown into the rotary tubular furnace from the two ends thereof.

4. A process as claimed under claim 1, characterized in that it uses a rotary tubular furnace with three different temperature zones through which the waste materials pass on their way through the furnace; the first furnace zone being used for drying waste materials and heated to an external wall temperature from 450 to 700°C; the second zone in which the waste materials are preferably carbonized having an external wall temperature from 200 to 550°C which is lower than in the first zone; and the third zone in which the remaining gases are removed from the waste materials having an external wall temperature from 450 to 700°C which is higher than in the second zone.

5. A process as claimed under claim 4, characterized in that the hot gas indirectly heating the rotary tubular furnace is first passed to the first and third zones and only then to the second zone.

6. A process as claimed under claim 1, characterized in that the rotary tubular furnace has lifter-type internals over its entire length.